# EUROPÄISCHE PATENTSCHRIFT

(11) **EP 3 046 855 B1**
(45) Veröffentlichungstag und Bekanntmachung des Hinweises auf die Patenterteilung: **06.12.2017**
(21) Anmeldenummer: 14765899.1
(22) Anmeldetag: 05.09.2014
(51) Int. Cl.: B65G 1/08, A47F 1/12

(54) **WARENÜBERGABEVORRICHTUNG SOWIE WARENLAGER MIT WARENÜBERGABEVORRICHTUNG**
GOODS TRANSFER DEVICE, AND WAREHOUSE WITH GOODS TRANSFER DEVICE
DISPOSITIF DE TRANSFERT DE MARCHANDISE ET ENTREPÔT ÉQUIPÉ D'UN DISPOSITIF DE TRANSFERT DE MARCHANDISE

(30) Priorität: 16.09.2013 DE 102013218538
(43) Veröffentlichungstag der Anmeldung: 27.07.2016
(73) Patentinhaber: Gebr. Willach GmbH, 53809 Ruppichteroth (DE)
(72) Erfinder: WILLACH, Jens, 53783 Eitorf (DE); MÜLLER, Hans-Friedrich, 53809 Ruppichteroth (DE)
(74) Vertreter: dompatent von Kreisler Selting Werner - Partnerschaft von Patent- und Rechtsanwälten mbB
(86) Internationale Anmeldenummer: PCT/EP2014/068933
(87) Internationale Veröffentlichungsnummer: WO 2015/036326

(56) Entgegenhaltungen:
- DE-A1- 10 000 684
- DE-A1- 10 002 845
- US-A- 3 894 656

## Beschreibung

Die vorliegende Erfindung betrifft eine Warenübergabevorrichtung für ein automatisches Warenlager sowie ein Warenlager mit einer Warenübergabevorrichtung.
Es ist bekannt, dass Lagerflächen, wie beispielsweise Kanallager, mit Lagerkanälen über einen Manipulator befüllt werden. Dabei wird das Eingabeende der Lagerfläche von dem Manipulator angefahren und die Gegenstände werden an die Lagerplätze übergeben. Derartige Lager werden häufig für Waren, beispielsweise Medikamente in Apotheken, eingesetzt. Besonders geeignet für schnelldrehende Waren sind Schrägfachbodenregale, bei denen die einzelnen Waren in Kanälen, die durch seitliche Begrenzungen getrennt sind, auf einer Lagerfläche, die gegenüber einer Horizontalfläche geneigt ist, enthalten sind. Bei einer Entnahme eines unteren Gegenstandes rutschen die übrigen Gegenstände nach. In der Regel sind in jedem Kanal gleichartige Gegenstände enthalten. Die Gegenstände weisen beispielsweise quaderförmige Packungen auf, wobei Packungen gleichen Formats in einem Kanal eingebracht werden, dessen Kanalbreite auf die Packungsgröße abgestimmt ist. Auf derartigen Lagerflächen können jedoch auch Waren unterschiedlicher Form, zum Beispiel Zylinder, und unterschiedlichen Formats innerhalb desselben Kanals gespeichert werden. Üblicherweise befüllen die Manipulatoren die Lagerplätze, sobald eine vorgegebene Anzahl von Waren aus einem Lagerkanal entnommen worden ist. Dazu wird ein Manipulator mit mehreren der nachzufüllenden Gegenstände befüllt und der Manipulator fährt das Eingabeende der entsprechenden Lagerfläche an, um die Gegenstände zu übergeben.

Um die Nachfüllfunktion der Lagerflächen auf zuverlässige Weise zu gewährleisten, muss sichergestellt werden, dass die Manipulatoren geordnet mit den einzulagernden Gegenständen befüllt werden. Da bekannte Manipulatoren mit einer sehr hohen Geschwindigkeit innerhalb eines Lagers bewegt werden, ist eine manuelle Bestückung der Manipulatoren mit einem großen Sicherheitsrisiko verbunden. Daher werden zumeist Übergabevorrichtungen verwendet, in die die Gegenstände manuell oder automatisch eingelegt werden. Die Manipulatoren übernehmen die einzulagernden Gegenstände von der Übergabevorrichtung, um anschließend den vorgegebenen Lagerplatz anzufahren.
In der Praxis wird häufig eine sehr schnelle Befüllung eines Lagers gefordert. Daher werden mehrere zumeist gleichartige Gegenstände von dem Manipulator gleichzeitig transportiert. Um eine schnelle Befüllung des Manipulators zu ermöglichen, werden daher an einer Übergabevorrichtung die von einem Manipulator zu transportierenden Gegenstände für einen kurzen Zeitraum gelagert. Das Einlegen der Gegenstände in die Übergabevorrichtung muss ebenfalls in einer großen Geschwindigkeit erfolgen. Daher ist sicherzustellen, dass die an den Manipulator zu übergebenden Gegenstände geordnet in der Übergabevorrichtung bereitgehalten werden.
Bei dem manuellen Einlegen von Gegenständen in die Übergabevorrichtung besteht darüber hinaus die Gefahr, dass der Bediener mit seiner Hand in den Verfahrweg des Manipulators gerät, wodurch ein sehr hohes Verletzungsrisiko gegeben ist. DE 100 02 845 A1 beschreibt eine gattungsgemäße Vorrichtung. Es ist daher die Aufgabe der vorliegenden Erfindung, eine Übergabevorrichtung für ein Warenlager zu schaffen, bei dem ein schnelles Einlegen von Gegenständen möglich ist und gleichzeitig eine schnelle und zuverlässige Übergabe der Gegenstände an ein Warenlager gewährleistet ist. Die Übergabevorrichtung soll darüber hinaus eine möglichst hohe Sicherheit für den Bediener bieten. Es ist ferner die Aufgabe der vorliegenden Erfindung, ein Warenlager mit einer derartigen Übergabevorrichtung zu schaffen.
Die erfindungsgemäße Warenübergabevorrichtung ist durch die Merkmale des Anspruchs 1 definiert. Das erfindungsgemäße Warenlager ist durch die Merkmale des Anspruchs 13 definiert.

Eine erfindungsgemäße Warenübergabevorrichtung für ein automatisches Warenlager weist mindestens einen Kanal mit einer Eingabeseite zur Einführung von Waren und eine Ausgabeseite zur Übergabe der Waren an das Warenlager auf. Der Kanal besitzt eine Auflagefläche zur Aufnahme der Waren. Die Erfindung ist dadurch gekennzeichnet, dass der Kanal eine seitlich an der Auflagefläche angeordnete Führungsfläche aufweist, dass die Auflagefläche in Richtung zu der Ausgabeseite hin gegenüber einer Horizontalfläche geneigt ist, und dass die Auflagefläche in Richtung zu der Führungsfläche hin in einem Neigungswinkel gegenüber der Horizontalfläche geneigt ist. Die Auflagefläche ist aus einer Wareneingabestellung in eine Warenausgabestellung verschwenkbar, wobei der Neigungswinkel der Auflagefläche in der Wareneingangsstellung größer ist als in der Warenausgangsstellung.
Über die Führungsfläche können auf der Auflagefläche angeordnete Waren in vorteilhafter Weise geführt werden. Dabei bewirkt die Neigung der Auflagefläche zu der Ausgabeseite hin, dass die auf die Auflagefläche abgelegten Gegenstände in Richtung der Ausgabeseite rutschen. Durch die Neigung der Auflagefläche in Richtung der Führungsfläche wird erreicht, dass die auf der Auflagefläche abgelegten Waren durch die Schwerkraft in Anlage an die Führungsfläche gelangen und somit in einer geordneten Reihe hintereinander angeordnet werden können. Die auf der Auflagefläche angeordneten Waren rutschen somit schwerkraftbedingt in Richtung der Ausgabeseite, wobei die Auflagefläche zusammen mit der Führungsfläche eine Art Rinne bilden, in der die Waren ebenfalls schwerkraftbedingt in Anlage an die Führungsfläche gelangen und somit ordentlich in einer Reihe angeordnet werden. Durch einen großen Neigungswinkel der Auflagefläche in der Wareneingabestellung in Richtung der Führungsfläche wird darüber hinaus erreicht, dass sich die auf die Auflagefläche aufgelegten Waren auch bei einem Aufprall auf einen Stopper, der beispielsweise an der Ausgabeseite des Kanals angeordnet ist, oder auf eine andere Ware nach einem kurzzeitigen Aufprall bedingten Verschieben wieder in die korrekte Reihenposition bewegen. Dadurch kann sichergestellt werden, dass die zur Übergabe an das Warenlager in der Warenübergabevorrichtung angeordneten Waren sich in einer für die Übergabe definierten Position befinden. Kurz vor der Übergabe der Waren an das Warenlager, beispielsweise an einen einzelne Lagerplätze des Warenlagers bedienenden Manipulator, kann die Auflagefläche aus einer Wareneingabestellung in eine Warenausgabestellung verschwenkt werden, wobei der Neigungswinkel der Auflagefläche gegenüber der Horizontalfläche in Richtung der Führungsfläche geringer ist als bei der Wareneingabestellung. Die Neigung der Auflagefläche in Richtung der Ausgabeseite bleibt bei der Warenausgabestellung im Vergleich zur Wareneingabestellung im Wesentlichen gleich. Da bei einer Vielzahl von Warenlagern die Lagerflächen und/oder die Transportflächen von Manipulatoren im Wesentlichen nur in eine Richtung geneigt sind, wird erreicht, dass die Auflagefläche der Warenübergabevorrichtung durch Verschwenken in die Warenausgabestellung an die Ausrichtung der Transportfläche eines Manipulators und/oder an die Ausrichtung einer Lagerfläche des Warenlagers angepasst werden kann. Dadurch kann die Übergabe in vorteilhafter Weise erfolgen. Die Auflagefläche der erfindungsgemäßen Warenübergabevorrichtung kann somit in der Wareneingabestellung eine vorteilhafte Anordnung der eingelegten Waren und in der Warenausgabestellung eine vorteilhafte Übergabe an das Warenlager bewirken, wobei die Waren in der Warenausgabestellung in einer Reihe und sehr schnell von der Auflagefläche gleiten können.

Durch das Vorsehen eines Kanals, der eine Eingabeseite aufweist, über die die Waren in den Kanal eingeführt werden können, wird darüber hinaus erreicht, dass ein Bediener die Waren an einer von der Ausgabeseite der Warenübergabe entfernten Stelle einlegen kann, so dass ein ausreichender Abstand zu einem die Ausgabeseite bedienenden Manipulator, der mit einer hohen Geschwindigkeit bewegt wird, gegeben ist. Dadurch wird das Verletzungsrisiko des Bedieners deutlich verringert.

Vorzugsweise ist vorgesehen, dass die Führungsfläche gegenüber der Auflagefläche in einem an die Waren angepassten Winkel angeordnet ist. Der Winkel weist vorzugsweise eine Weite zwischen 85° und 90° auf. Eine derartige Weite hat sich für Waren, die eine rechtwinklige Verpackung aufweisen, als besonders vorteilhaft erwiesen.

In einem besonders bevorzugten Ausführungsbeispiel der Erfindung ist vorgesehen, dass die Führungsfläche zusammen mit der Auflagefläche verschwenkbar ist. Dadurch wird erreicht, dass die Waren, die in der Wareneingabestellung an der Führungsfläche anliegen, während des Verschwenkens der Auflagefläche weiter in Anlage an der Führungsfläche verbleiben, so dass die Waren in der gewünschten Reihenanordnung verbleiben. Darüber hinaus bildet die Führungsfläche somit auch in der Warenausgabestellung eine Führung, so dass die Führungsfläche auch bei der Warenübergabe an das Warenlager mit den Waren zusammenwirkt. In der Wareneingabestellung ist die Führungsfläche in einem Winkel zu der Vertikalen angeordnet, so dass die Waren teilweise auf der Führungsfläche aufliegen, wodurch eine besonders vorteilhafte Führung erreicht werden kann. Die Auflagefläche und die Führungsfläche können beispielsweise jeweils durch ein Plattenteil gebildet sein, wobei die Plattenteile fest miteinander verbunden sind. Die Auflagefläche kann über ein an dem die Führungsfläche bildenden Plattenteil angeordnetes Gelenk verschwenkbar gelagert sein.

In einem besonders bevorzugten Ausführungsbeispiel der Erfindung ist vorgesehen, dass an der Ausgabeseite des Kanals eine öffenbare Stauklappe angeordnet ist. Die Stauklappe kann somit als Anschlag für die auf die Auflagefläche der Warenübergabevorrichtung aufgelegten Waren dienen. Darüber hinaus kann durch die Stauklappe der gesamte durch den Kanal gebildete Durchgang zu einem Warenlager versperrt werden, so dass bei geschlossener Stauklappe ein Zugriff durch die Ausgabeseite des Kanals auf das Innere des Warenlagers verhindert wird. Dadurch wird eine Verletzungsgefahr des Bedieners deutlich reduziert, da dieser bei geschlossener Stauklappe nicht in das Warenlager und somit nicht in den Verfahrweg eines Manipulators greifen kann.

Vorzugsweise ist vorgesehen, dass die Auflagefläche über ein linear angetriebenes Antriebselement antreibbar ist. Auf diese Weise kann ein sehr kompakter, einfach konstruierter Antrieb für die Auflagefläche geschaffen werden, der darüber hinaus kostengünstig herstellbar ist. Als Antrieb kann beispielsweise ein Universalmotor dienen, der das Antriebselement über ein Ritzel und eine Zahnstange linear antreibt.

Dabei kann vorgesehen sein, dass das Antriebselement eine Rampe aufweist, auf der ein mit der Auflagefläche verbundenes Führungsrad abrollt. Über die Rampe, auf der das Führungsrad abrollt, kann in vorteilhafter Weise die lineare Bewegung des Antriebselementes in die Verschwenkbewegung der Auflagefläche gewandelt werden. Bei einer derartigen Konstruktion wird darüber hinaus die Auflagefläche lediglich bei der Überführung der Auflagefläche von der Warenausgabestellung in die Wareneingabestellung durch den Antrieb zwangsgeführt. Bei dem Verschwenken aus der Wareneingabestellung in die Warenausgabestellung wird die Verschwenkbewegung im Wesentlichen durch die Schwerkraft, die auf die Auflagefläche und auf, auf der Auflagefläche angeordnete Waren ausgeübt wird, bewirkt. Dies hat den Vorteil, dass die Verletzungsgefahr für einen Bediener verringert wird, da ein etwaiges Einklemmen von Gliedmaßen zwischen der Auflagefläche und Teilen der Umgebung lediglich mit der Gewichtskraft der Auflagefläche und der darauf enthaltenen Waren auf den Bediener einwirken, ohne dass eine zusätzliche Antriebskraft die Klemmwirkung erhöht.

Unter Antrieb der Auflagefläche wird im Rahmen der Erfindung eine durch eine Antriebsvorrichtung mittels einer Antriebskraft erfolgte Bewegung der Auflagefläche und ein Freigeben der Auflagefläche, so dass diese aufgrund der Schwerkraft verschwenkt wird, verstanden.

In einem Ausführungsbeispiel der Erfindung ist vorgesehen, dass das Führungsrad eine abgerundete Rollfläche aufweist. Da die Auflagefläche eine Verschwenkbewegung durchführt, erfolgt eine Verschiebung des Auflagebereiches der Rollfläche des Führungsrades während der Rollbewegung, da auch die Achse des Führungsrades verschwenkt wird. Durch die abgerundete Rollfläche wird erreicht, dass das Führungsrad während der Bewegung koordiniert auf der Rampe abrollen kann. Alternativ oder zusätzlich kann vorgesehen sein, dass die Rampe eine gewundene Führungsbahn aufweist, die die Verschwenkbewegung der Achse des Führungsrades ausgleicht.

In einem bevorzugten Ausführungsbeispiel der Erfindung ist vorgesehen, dass das Antriebselement die Stauklappe zum Öffnen der Ausgabeseite des Kanals antreibt. Es ist somit ein gemeinsamer Antrieb von Auflagefläche und Stauklappe vorgesehen. Dabei kann vorgesehen sein, dass die Stauklappe erst nach dem Verschwenken der Auflagefläche in die Warenausgabestellung angetrieben wird. Somit besitzen Stauklappe und Auflagefläche einen gemeinsamen Antrieb, wobei die Betätigung von Auflagefläche und Stauklappe zeitversetzt erfolgt. Dies kann beispielsweise dadurch erreicht werden, dass das Antriebselement erst mit der Stauklappe zusammenwirkt, wenn das Führungsrad bereits vollständig von der Rampe gerollt ist und somit die Auflagefläche in die Warenausgabestellung verschwenkt worden ist. Beispielsweise ist es auch möglich, dass das Antriebselement in dieser Stellung verweilt, so dass die Auflagefläche bereits in der Warenausgabestellung angeordnet ist, jedoch die Stauklappe noch nicht geöffnet wird. Eine derartige Steuerung der Warenübergabevorrichtung ist von besonderem Vorteil in Verwendung mit einem Warenlager mit Manipulator, da der Kanal der Warenübergabevorrichtung mit Waren befüllt in der Warenausgabestellung verweilen kann, bis der Manipulator die Warenübergabevorrichtung angefahren hat. Erst dann wird die Stauklappe geöffnet. Dadurch kann erreicht werden, dass eine sehr schnelle Übergabe der Waren an das Warenlager erfolgen kann. Gleichzeitig wird verhindert, dass die Verschwenkbewegung der Auflagefläche mit einer hohen Geschwindigkeit erfolgen muss, wodurch ein Verrutschen der auf der Auflagefläche angeordneten Waren vermieden werden kann.

Durch das Vorsehen eines gemeinsamen Antriebs von Stauklappe und Auflagefläche ist eine kostengünstige Konstruktion der Warenübergabevorrichtung möglich, da beispielsweise lediglich ein Antriebsmotor verwendet werden muss.

Das Schließen der Stauklappe kann beispielsweise schwerkraftbedingt erfolgen. Zusätzlich kann eine Feder vorgesehen sein, die die Verschwenkbewegung der Stauklappe aus einer geöffneten Stellung in die Schließstellung unterstützt. Eine derartige Konstruktion hat den Vorteil, dass bei dem Schließvorgang der Stauklappe, bei der die Gefahr einer Verletzung eines Bedieners durch Einklemmen von Gliedmaßen besteht, lediglich das Gewicht der Stauklappe und gegebenenfalls die Federkraft der zusätzlichen Feder auf den Bediener einwirkt und keine zusätzliche Antriebskraft des Antriebs. Dadurch wird die Verletzungsgefahr deutlich verringert.

In einem Ausführungsbeispiel der Erfindung ist vorgesehen, dass die Stauklappe über ein von dem Antriebselement angetriebenes Betätigungselement verschwenkbar ist, wobei das Betätigungselement in einer Kulissenführung geführt ist. Eine derartige Konstruktion hat sich als besonders vorteilhaft herausgestellt. Das Betätigungselement muss dabei lediglich von dem Antriebselement verschoben werden, wobei die Kulissenführung das Betätigungselement zum Hervorrufen der Verschwenkbewegung der Stauklappe führt.

Dabei kann vorgesehen sein, dass die Kulissenführung in der Schließstellung der Stauklappe selbsthemmend ist. Dadurch wird verhindert, dass die Stauklappe durch ein Aufprallen von auf die Auflagefläche aufgelegten Waren selbstständig öffnet. Durch die Selbsthemmung der Kulissenführung ist eine Bewegung des Betätigungselementes in der Kulissenführung ohne eine separate Antriebskraft des Antriebselementes nicht möglich. Die Stauklappe kann somit durch eine Krafteinwirkung auf die dem Eingabeende des Kanals zugewandten Fläche der Stauklappe nicht geöffnet werden. Somit kann auch verhindert werden, dass der Bediener versehentlich beim Befüllen der Warenübergabevorrichtung gegen die Stauklappe stößt, diese ungewollt öffnet und mit Gliedmaßen in den hinter der Stauklappe befindlichen Bereich des Warenlagers, in dem sich beispielsweise ein Verfahrweg eines Manipulators befindet, gerät. Dadurch wird eine mögliche Verletzungsgefahr des Bedieners verhindert. Die Selbsthemmung der Stauklappe wird erst durch die Antriebskraft des Antriebselementes überwunden.

In einem Ausführungsbeispiel der Erfindung kann vorgesehen sein, dass an der Stauklappe ein Sensor zur Erkennung der Schließstellung der Stauklappe angeordnet ist. Dadurch kann einem automatischen Warenlager die Information bereitgestellt werden, dass sich die Stauklappe in der Schließstellung befindet, so dass ein in dem Warenlager angeordneter Manipulator erst nach der vollständigen Schließung der Stauklappe bewegt wird. Eine derartige Steuerung ist unter Sicherheitsgesichtspunkten von Vorteil, da der Manipulator erst bewegt wird, wenn aufgrund der geschlossenen Schließstellung der Bediener nicht in den Verfahrweg des Manipulators gelangen kann.

In einem Ausführungsbeispiel der Erfindung ist vorgesehen, dass der Neigungswinkel α der Auflagefläche in der Wareneingabestellung zwischen 35° und 45° beträgt und/oder dass der Neigungswinkel in der Warenausgabestellung zwischen 4° und 10° beträgt. Ein derartiger Winkel in der Wareneingabestellung hat sich als besonders vorteilhaft herausgestellt, da bei einem derartigen Winkel sichergestellt werden kann, dass die auf die Warenübergabe gelegten Waren gegen die Führungsfläche rutschen und sich somit in vorteilhafter Weise in einer Reihe anordnen. Der Neigungswinkel in der Warenausgabestellung zwischen 4° und 10° bewirkt, dass nach einer Anordnung der Waren in einer Reihe weiterhin eine Anlage an der Führungsfläche sichergestellt wird, wobei gleichzeitig eine Übergabe an das Warenlager in vorteilhafter Weise möglich ist, ohne dass eine die Warenübergabe störende, zu hohe Kante zwischen Auflagefläche und der Fläche des übernehmenden Teils des Warenlagers entsteht.

In einem besonders bevorzugten Ausführungsbeispiel der Erfindung ist vorgesehen, dass die Warenübergabevorrichtung zwei Kanäle aufweist, wobei die Auflageflächen und/oder die Stauklappen beider Kanäle über ein gemeinsames Antriebselement antreibbar sind. Dabei kann vorgesehen sein, dass die Auflageflächen beider Kanäle gleichzeitig antreibbar sind und/oder dass die Stauklappen beider Kanäle gleichzeitig öffenbar sind. Eine derartige Übergabevorrichtung ist insbesondere bei Warenlagern mit einem sehr hohen Warendurchsatz von Vorteil, da beide Kanäle der Warenübergabevorrichtung gleichzeitig befüllt werden können und ein Manipulator, der zwei Transportflächen besitzt, gleichzeitig Waren aus beiden Kanälen übernehmen kann. Selbstverständlich ist es auch möglich, dass die Warenübergabevorrichtung mehr als zwei Kanäle aufweist. Beispielsweise ist es möglich, dass die Warenübergabevorrichtung mehrere Paare von Kanälen aufweist, wobei die Auflageflächen und/oder die Stauklappen jeweils paarweise über ein gemeinsames Antriebselement antreibbar sind. Eine derartige Warenübergabevorrichtung bietet den Vorteil, dass einzelne Kanäle oder Kanalpaare der Warenübergabevorrichtung mit Waren befüllt werden können, während an anderen Kanälen eine Übergabe an das Warenlager erfolgt. Auf diese Weise ist ein besonders flexibler Einsatz der Warenübergabevorrichtung möglich, wobei gleichzeitig eine sehr schnelle Befüllung eines Warenlagers über eine Warenübergabevorrichtung möglich ist.

Die Erfindung betrifft ferner ein Warenlager, vorzugsweise ein automatisches Warenlager, das mit einer erfindungsgemäßen Warenübergabevorrichtung versehen ist.

Dabei kann vorgesehen sein, dass das Warenlager einen Manipulator aufweist, der die Waren von der Warenübergabevorrichtung übernimmt. Der Manipulator weist vorzugsweise eine Transportfläche auf, die in eine Richtung zu dem Ausgabeende des Manipulators hin gegenüber der Horizontalfläche geneigt ist. Über den Manipulator können in vorteilhafter Weise Waren von der Warenübergabevorrichtung übernommen werden und an Lagerplätze des Warenlagers überführt werden. Die Transportfläche des Manipulators ist in die gleiche Richtung geneigt, wie die Auflagefläche der Warenübergabevorrichtung, vorzugsweise in einem gleichen Winkel. Dadurch können in vorteilhafter Weise die Waren von der Warenübergabevorrichtung schwerkraftbedingt auf die Transportfläche des Manipulators rutschen.

Das Warenlager kann mehrere, als Kanallager ausgebildete Lagerflächen zur Lagerung der Waren aufweisen. Dabei ist vorzugsweise vorgesehen, dass die Lagerflächen in einer Richtung zu der Warenausgabe des Warenlagers hin gegenüber der Horizontalfläche geneigt sind. Vorzugsweise ist die Neigung der Lagerflächen in gleicher Richtung und in einem gleichen oder ähnlichen Winkel, wie die Neigung der Transportfläche des Manipulators und/oder der Neigung der Auflagefläche der Warenübergabevorrichtung.

Im Folgenden wird unter Bezugnahme auf die nachfolgenden Figuren die Erfindung näher erläutert.

Es zeigen:
- Figur 1: eine schematische Perspektivdarstellung einer erfindungsgemäßen Warenübergabevorrichtung,
- Figur 2: eine Hinteransicht der in Fig. 1 dargestellten erfindungsgemäßen Warenübergabevorrichtung und
- Figur 3: eine schematische Perspektivdarstellung des Antriebs einer Warenübergabevorrichtung.

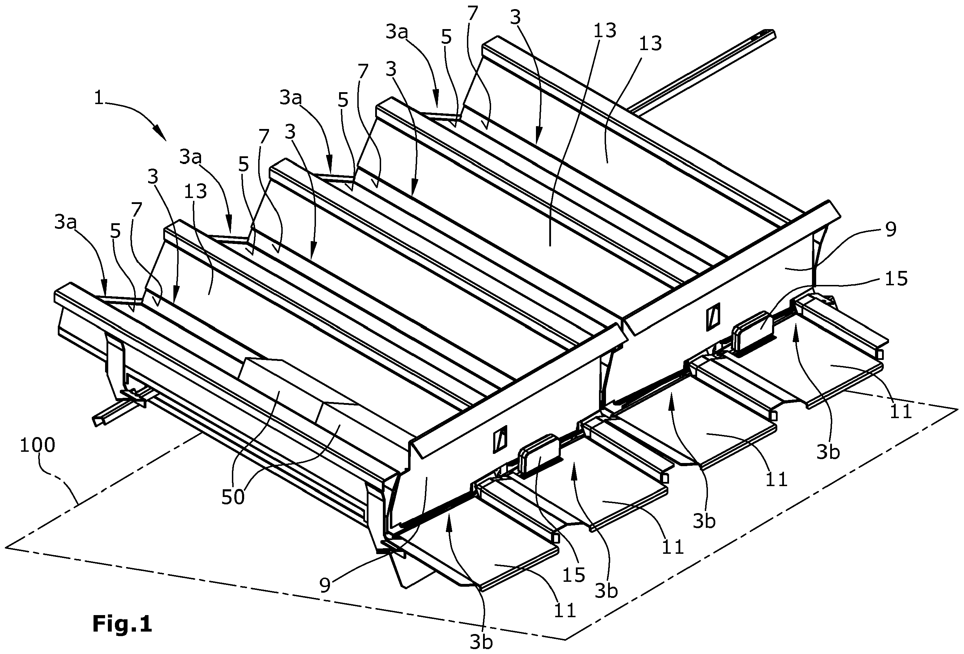

In Fig. 1 ist eine Warenübergabevorrichtung 1 schematisch in einer Perspektivdarstellung gezeigt. Die Warenübergabevorrichtung kann beispielsweise mit einem nicht dargestellten, automatischen Warenlager zusammenwirken.

Die Warenübergabevorrichtung 1 weist mehrere Kanäle 3 auf, die parallel zueinander angeordnet sind. Die Kanäle 3 weisen jeweils eine Eingabeseite 3a zur Einführung von Waren 50 und eine Ausgabeseite 3b auf. In einen Kanal 3 eingeführte Waren 50 rutschen entlang dem Kanal 3 bis zu der Ausgabeseite 3b und werden dort an das nicht dargestellte Warenlager übergeben.

Die Kanäle 3 weisen jeweils eine Auflagefläche 5 auf, die zur Aufnahme der Waren 50 dient. Seitlich jeder Auflagefläche 5 ist eine Führungsfläche 7 angeordnet, die in einem an die Waren 50 angepassten Winkel zu der Auflagefläche 5 verläuft. Bei dem in den Figuren dargestellten Ausführungsbeispiel beträgt der Winkel zwischen Führungsfläche 7 und Auflagefläche 5 90°. Die Auflagefläche 5 und die Führungsfläche 7 werden durch Plattenteile gebildet.

Die Auflagefläche 5 ist in Richtung zu der Ausgabeseite 3b hin gegenüber einer Horizontalfläche 100 geneigt, so dass auf eine Auflagefläche 5 gelegte Waren entlang dem Kanal 3 schwerkraftbedingt rutschen.

Die Ausgabeseite 3b der Kanäle 3 ist mittels Stauklappen 9 verschlossen. Die Stauklappen 9 lassen sich um eine horizontale Achse verschwenken, so dass sie zur Freigabe des Kanals 3 nach oben wegklappen. Eine in einen Kanal 3 eingeführte Ware 50 rutscht entlang der Auflagefläche 5 und stößt gegen die Stauklappe 9. Die nachfolgenden Waren 50 stoßen an die zuvor eingeführte Ware, so dass die Waren 50 in einer Reihe angeordnet werden. Dabei bewirkt die Führungsfläche 7, dass eine geordnete Reihenanordnung der Waren 50 sichergestellt wird.

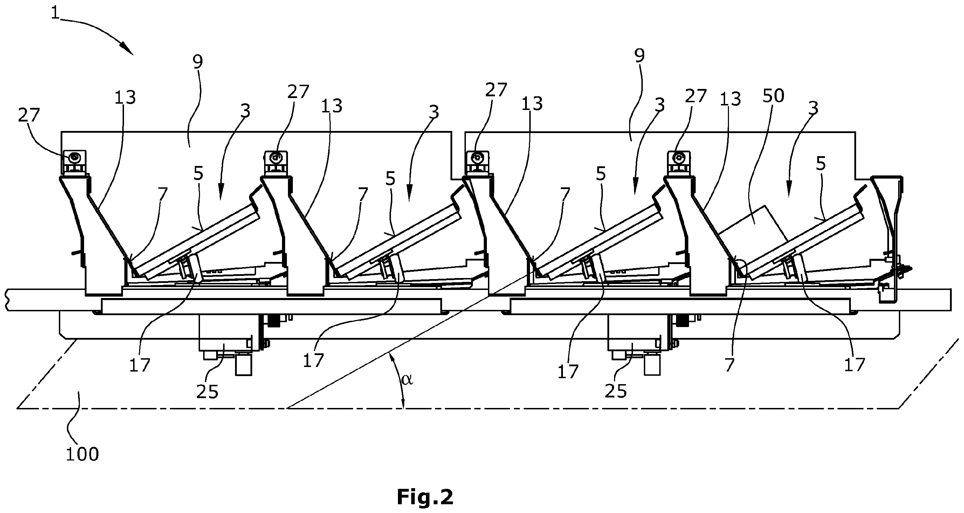

Die Auflagefläche 5 ist in einem Neigungswinkel α gegenüber der Horizontalfläche in Richtung zu der Führungsfläche 7 hin geneigt, was schematisch in Fig. 2 gezeigt ist. Dadurch wird sichergestellt, dass auf die Auflagefläche 5 aufgelegte Waren nicht nur in Richtung zu der Ausgabeseite 3b des Kanals 3 hin rutschen, sondern auch in Richtung der Führungsfläche 7 und an dieser anliegen. Bei der Reihenanordnung der Waren 50 kann dadurch sichergestellt werden, dass beim Aufprall einer Ware 50 auf die Stauklappe 9 oder eine zuvor eingeführte Ware 50 nach einem kurzzeitigen durch den Aufprall bedingten Verrutschen die Reihenordnung wiederhergestellt wird. Das Verrutschen der Waren 50 auf der Auflagefläche 5 in Richtung zu der Ausgabeseite 3b des Kanals 3 und zu der Führungsfläche 7 erfolgt ausschließlich schwerkraftbedingt.

An der Ausgabeseite 3b der Kanäle 3 sind Übergabeflächen 11 angeordnet, auf denen eine Ware 50 nach dem Öffnen einer Stauklappe 9 zur Übergabe an das Warenlager rutschen kann. Die Übergabeflächen 11 weisen lediglich eine Neigung in die Kanallängsrichtung auf, jedoch keine zweite Neigerichtung. Die Neigung der Übergabeflächen 11 entspricht im Wesentlichen der Neigung von Lagerflächen des Warenlagers oder eines Manipulators, der Waren 50 von den Übergabeflächen 11 übernimmt.

Die Auflageflächen 5 sind in Fig. 1 in ihrer Wareneingabestellung gezeigt. Wie beschrieben, weisen die Auflageflächen dabei eine Neigung in Richtung der Ausgabeseite 3b und in Richtung der Führungsflächen 7 auf. Durch die Neigung in zwei Richtungen besteht zwischen den Übergabeflächen 11 und den Auflageflächen 5 in ihrer Wareneingabestellung ein großer Versatz, der zu einem Verrutschen der Warenreihe bei der Übergabe an das Warenlager führen würde. Daher besteht die Möglichkeit, die Auflagefläche 5 aus der Wareneingabestellung in eine Warenausgabestellung zu verschwenken. Die Auflageflächen 5 werden somit in einer Richtung abgesenkt, so dass zwar die Neigung in Richtung der Ausgabeseite 3b bestehen bleibt, jedoch der Neigungswinkel α gegenüber der Horizontalfläche 100 in Richtung der Führungsfläche 7 soweit verringert wird, dass kein oder nur ein geringer Absatz zu der Übergabefläche 11 entsteht. Beim Verschwenken der Auflagefläche 5 wird die Führungsfläche 7 zusammen mit der Auflagefläche 5 verschwenkt, so dass beim Verschwenken die Waren 50 weiterhin an der Führungsfläche 7 anliegen und die Reihenanordnung der Waren 50 bestehen bleibt.

Oberhalb der Führungsfläche 7 weisen die Kanäle jeweils eine Abdeckung 13 auf, die in der Wareneingabestellung der Auflagefläche 5 zusammen mit der Führungsfläche 7 eine Führungsfunktion übernehmen. In der Warenausgabestellung dienen die Abdeckungen 13 lediglich zum Schutz des unterhalb der Kanäle angeordneten Antriebsmechanismus der Warenübergabevorrichtung 1.

Die Auflageflächen 5 sind über die die Führungsflächen 7 bildende Plattenteile an den Abdeckungen 13 mittels nicht dargestellter Gelenke verschwenkbar gelagert.

An den Stauklappen 9 ist jeweils ein Sensor 15 angeordnet, über den die in Fig. 1 dargestellte Schließstellung der Stauklappen 9 erkannt werden kann. Dadurch kann ein Signal an eine Steuereinrichtung eines Manipulators des Warenlagers übermittelt werden, so dass ein Manipulator erst in Bewegung versetzt wird, wenn die Stauklappen 9 vollständig geschlossen sind. Dadurch kann verhindert werden, dass ein Bediener, der Waren 50 auf die Warenübergabevorrichtung 1 legt, versehentlich mit Gliedmaßen in den Verfahrweg des Manipulators gerät und dadurch verletzt wird. Die Sensoren 15 bieten somit zusammen mit der Steuerung des Manipulators eine erhöhte Sicherheit für den Bediener.

Die Warenübergabevorrichtung 1 ist vorzugsweise derart an einem Warenlager befestigt, dass die Stauklappen 9 nahezu vollständig mit einem Gehäuse des Warenlagers abschließen, so dass ein Zugang zu dem Warenlager in dem Bereich der Warenübergabevorrichtung 1 ausschließlich über die durch die Stauklappen 9 freigebbare Öffnung erfolgen kann. Dadurch kann sichergestellt werden, dass ein Bediener nicht versehentlich, beispielsweise mit den Händen, in den Verfahrweg eines Manipulators geraten kann.

In Fig. 2 ist eine schematische Ansicht von hinten auf die Warenübergabevorrichtung 1 dargestellt. Die Blickrichtung der Darstellung in Fig. 2 ist entlang den Kanälen 3, so dass die Blickrichtung schräg nach unten verläuft.

In Fig. 2 sind die Auflageflächen 5 ebenfalls in der Wareneingabestellung gezeigt. Die Auflageflächen 5 verlaufen in Richtung der Führungsfläche 7 gegenüber der schematisch dargestellten Horizontalfläche 100 in dem Neigungswinkel *α*. Der Neigungswinkel *α* kann in der Wareneingabestellung beispielsweise 35° bis 45° betragen. In der nicht dargestellten Warenausgabestellung kann der Neigungswinkel zwischen 4° und 10° betragen.

An der Unterseite der Auflagefläche 5 sind Führungsräder 17 angeordnet, über die die Auflagefläche 5 verschwenkbar angetrieben wird.

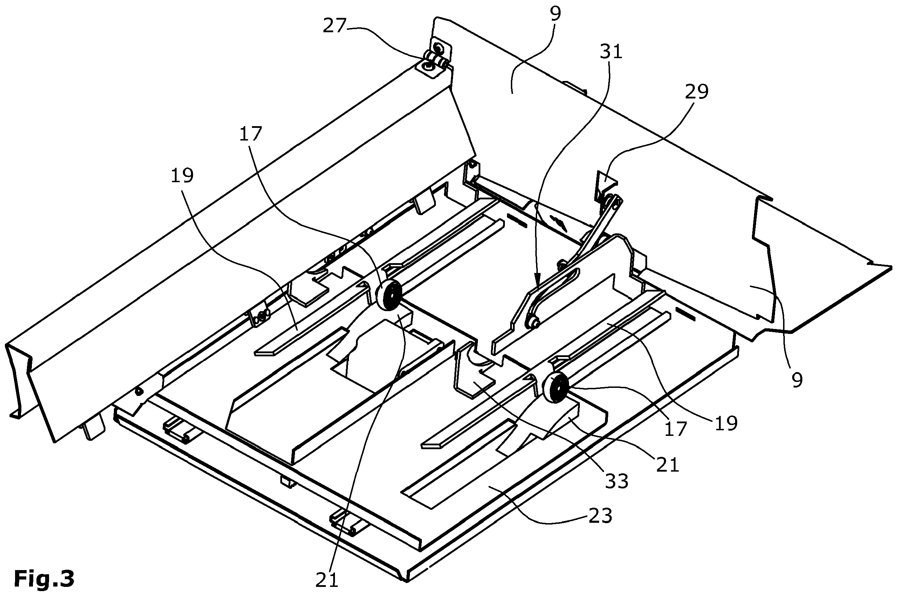

Zur Erläuterung der Funktionsweise des Antriebs ist in Fig. 3 ein Bereich der Warenübergabevorrichtung 1 schematisch in der Draufsicht ohne Auflageflächen 5 dargestellt. Die Führungsräder 17 sind an Tragrahmen 19 angeordnet, über die die Führungsräder 17 an der Unterseite des die Auflagefläche 5 bildenden Plattenteils befestigt sind. Die Führungsräder 17 rollen auf Rampen 21 eines Antriebselementes 23 ab. Das Antriebselement 23 ist linear in Richtung zu der Stauklappe 9 hin und von dieser weg antreibbar. In der in Fig. 3 dargestellten Stellung befindet sich die nicht dargestellte Auflagefläche 5 in ihrer Wareneingabestellung. Durch die lineare Bewegung des Antriebselementes 23 in Richtung zu der Stauklappe 9 hin rollen die Führungsräder 17 jeweils auf der ihnen zugeordneten Rampe 21 ab, so dass die Tragrahmen 19 und somit die Auflageflächen 5 zusammen mit den Führungsflächen 7 abgesenkt bzw. verschwenkt werden.

Durch das Abrollen der Führungsräder 17 auf den Rampen 21 können die Auflageflächen 5 zweier benachbarter Kanäle 3 gleichzeitig aus der Wareneingabestellung in die Warenausgabestellung verschwenkt werden. Ferner kann das Antriebselement 23 auf konstruktiv einfache Art und Weise von einem Motor 25, der schematisch in Fig. 2 dargestellt ist, angetrieben werden. Der lineare Antrieb kann beispielsweise über eine nicht dargestellte Zahnstange, die von einem Abtriebsritzel des Motors 25 angetrieben wird, bewirkt werden.

Die Stauklappen 9 sind, wie in Fig. 2 ersichtlich, mittels Scharnieren 27 verschwenkbar gelagert. Der Antrieb der Stauklappen 9 kann ebenfalls über das Antriebselement 23 erfolgen. Dazu ist an der Rückseite der Stauklappe 9 ein Betätigungselement 29 angeordnet, über das die Verschwenkbewegung der Stauklappe 9 hervorgerufen wird. Das Betätigungselement 29 ist in einer Kulissenführung 31 geführt. In der dargestellten Schließstellung der Stauklappe 9 ist die Kulissenführung 31 selbsthemmend ausgebildet, so dass die den Kanälen 3 zugewandte Seite der Stauklappe 9 nicht zu einem ungewollten Öffnen der Stauklappe 9 führt. Somit wird verhindert, dass durch einen Aufprall von Waren 50 auf die Stauklappe 9 oder ein versehentliches Stoßen des Bedieners gegen die Stauklappe 9 zu einem ungewollten Öffnen der Stauklappe 9 führt.

Zum Antrieb der Stauklappe 9 weist das Antriebselement 23 eine Betätigungsnase 33 auf, die mit dem Betätigungselement 29 zusammenwirkt. Die Betätigungsnase 33 weist eine gekrümmte Kante auf, die gegen das Betätigungselement 29 stößt und dieses entlang der Kulissenführung 31 drückt. Bei einem Zurückfahren des Antriebselementes 23 löst sich die Betätigungsnase 33 von dem Betätigungselement 29 und führt lediglich eine zusätzliche Führungsfunktion für das Betätigungselement 29 aus, wobei die Stauklappe 9 schwerkraftbedingt in ihre Schließstellung verschwenkt. Es kann auch vorgesehen sein, dass an dem Betätigungselement 29 eine nicht dargestellte Feder angeordnet ist, die eine zusätzliche Federkraft zum Schließen der Stauklappe 9 aufbringt.

Wie am besten aus Fig. 2 ersichtlich ist, weisen die Führungsräder 17 eine gekrümmte Lauffläche auf, über die ein koordiniertes Abrollen der Führungsräder auf den Rampen 21 erfolgen kann. Bei dem Verschwenken der Auflageflächen 5 erfolgt ebenfalls eine Veränderung der Richtung der Achsen der Führungsräder 17, so dass durch die abgerundeten Rollflächen dieses Verschwenken ausgeglichen werden kann.

Die Antriebsvorrichtung 23 bewirkt, dass zwei benachbarte Auflageflächen 5 und die Stauklappe 9 gemeinsam über einen Antrieb angetrieben werden können. Dabei erfolgt der Antrieb der Stauklappe 9 zeitversetzt zu dem Verschwenken der Auflageflächen 5. Die Verschwenkbewegung der Auflageflächen 5 aus der Wareneingabestellung in die Warenausgabestellung erfolgt im Wesentlichen schwerkraftbedingt, indem die Führungsräder 17 auf den Rampen 21 abrollen.

Die Verschwenkbewegung der Auflageflächen 5 aus der Warenausgabestellung in die Wareneingabestellung erfolgt durch den Motor 25, indem dieser das Antriebselement 23 derart bewegt, dass sich die Rampen 21 unter die Führungsräder 17 schieben.

Die Kanäle 3 sind derart ausgebildet, dass unterschiedliche Packungsgrößen von Waren aufgenommen und an das Warenlager übergeben werden können. Die erfindungsgemäße Warenübergabevorrichtung 1 ermöglicht dabei eine sehr schnelle Übergabegeschwindigkeit. Auch ist es möglich, einzelne Waren sehr schnell in die Warenübergabevorrichtung 1 einzulegen, da durch die Neigungen der Auflageflächen 5 die Waren 50 in vorteilhafter Weise in einer Reihe angeordnet werden.

Der lineare Antrieb über den Motor 25 und das Antriebselement 23 ermöglicht eine kostengünstige Konstruktion, wobei gleichzeitig eine sehr flache Bauweise geschaffen werden kann.

Bei der in den Figuren dargestellten, erfindungsgemäßen Warenübergabevorrichtung 1 sind vier Kanäle 3 vorgesehen, wobei jeweils zwei Kanäle 3 paarweise über einen Motor 25 angetrieben werden. Ein Bediener kann zunächst Waren 50 in ein Paar Kanäle 3 einführen und während diese Kanäle die Waren 50 an das Warenlager, beispielsweise einen Manipulator, übergeben, können die anderen beiden Kanäle befüllt werden. Dabei können auch Verweilzeiten zwischen dem Befüllen der Kanäle 3 und der Übergabe entstehen.

Der erfindungsgemäße Antrieb der Auflageflächen 5 und der Stauklappen 9 ist dabei so ausgestaltet, dass die Auflageflächen 5 bereits vollständig in die Warenausgabeposition abgesenkt werden können, jedoch die Stauklappe 9 noch nicht geöffnet ist. In dieser Stellung kann das Antriebselement 23 angehalten werden und erst, wenn beispielsweise ein Manipulator an der Ausgabeseite 3b der entsprechenden Kanäle 3 in Position gefahren ist, wird durch ein weiteres Verfahren des Antriebselementes 23 die Stauklappe 9 geöffnet. Durch diese zeitliche Trennung des Antriebs der Stauklappe 9 und des Antriebs der Auflageflächen 5 kann darüber hinaus die erfindungsgemäße Warenübergabevorrichtung derart gesteuert werden, dass ein Verschwenken der Auflageflächen 5 relativ langsam erfolgt, so dass ein Verrutschen der Waren 50 verhindert wird, wohingegen das Öffnen der Stauklappe 9 mit hoher Geschwindigkeit erfolgt. Dies kann beispielsweise dadurch erfolgen, dass das Antriebselement 23 in den unterschiedlichen Phasen mit unterschiedlicher Geschwindigkeit angetrieben wird.

Dadurch ist ein sehr flexibler Einsatz der erfindungsgemäßen Warenübergabevorrichtung 1 möglich.

## Patentansprüche

1. Warenübergabevorrichtung (1) für ein automatisches Warenlager,
- mit mindestens einem Kanal (3) mit einer Eingabeseite (3a) zur Einführung von Waren (50) und einer Ausgabeseite (3b) zur Übergabe der Waren an das Warenlager,
wobei der Kanal (3) eine Auflagefläche (5) zur Aufnahme von Waren (50) aufweist, wobei der Kanal (3) eine seitlich an der Auflagefläche (5) angeordnete Führungsfläche (7) aufweist, wobei die Auflagefläche (5) in Richtung zu der Ausgabeseite (3b) hin gegenüber einer Horizontalfläche (100) geneigt ist und wobei die Auflagefläche (5) in Richtung zu der Führungsfläche (7) hin in einem Neigungswinkel (α) gegenüber der Horizontalfläche (100) geneigt ist, **dadurch gekennzeichnet, dass** die Auflagefläche (5) aus einer Wareneingabestellung in eine Warenausgabestellung verschwenkbar ist, wobei der Neigungswinkel *α* der Auflagefläche in der Wareneingabestellung größer ist als in der Warenausgabestellung.

2. Warenübergabevorrichtung nach Anspruch 1, **dadurch gekennzeichnet, dass** die Führungsfläche (7) gegenüber der Auflagefläche (5) in einem an die Waren (50) angepassten Winkel angeordnet ist, wobei die Führungsfläche (7) vorzugsweise zusammen mit der Auflagefläche (5) verschwenkbar ist.

3. Warenübergabevorrichtung nach Anspruch 1 oder 2, **dadurch gekennzeichnet, dass** an der Ausgabeseite (3b) des Kanals (3) eine öffenbare Stauklappe (9) angeordnet ist.

4. Warenübergabevorrichtung nach einem der Ansprüche 1 bis 3, **dadurch gekennzeichnet, dass** die Auflagefläche (5) über ein linear angetriebenes Antriebselement (23) antreibbar ist.

5. Warenübergabevorrichtung nach Anspruch 4, **dadurch gekennzeichnet, dass** das Antriebselement (23) eine Rampe (21) aufweist, auf der ein mit der Auflagefläche (5) verbundenes Führungsrad (17) abrollt, wobei das Führungsrad (17) vorzugsweise eine abgerundete Rollfläche aufweist.

6. Warenübergabevorrichtung nach einem der Ansprüche 4 oder 5, **dadurch gekennzeichnet, dass** das Antriebselement (23) die Stauklappe (9) zum Öffnen der Ausgabeseite (3b) des Kanals (3) antreibt.

7. Warenübergabevorrichtung nach Anspruch 6, **dadurch gekennzeichnet, dass** die Stauklappe (9) über ein von dem Antriebselement (23) angetriebenes Betätigungselement (29) verschwenkbar ist, wobei das Betätigungselement in einer Kulissenführung (31) geführt ist.

8. Warenübergabevorrichtung nach Anspruch 7, **dadurch gekennzeichnet, dass** die Kulissenführung (31) in der Schließstellung der Stauklappe (9) selbsthemmend ist.

9. Warenübergabevorrichtung nach einem der Ansprüche 3 bis 8, **dadurch gekennzeichnet, dass** an der Stauklappe (9) ein Sensor (15) zur Erkennung der Schließstellung der Stauklappe (9) angeordnet.

10. Warenübergabevorrichtung nach einem der Ansprüche 1 bis 9, **dadurch gekennzeichnet, dass** der Neigungswinkel (*α*) der Auflagefläche (5) in der Wareneingabestellung zwischen 35° und 45° beträgt und/oder dass der Neigungswinkel (*α*) in der Warenausgabestellung zwischen 4° und 10° beträgt.

11. Warenübergabevorrichtung nach einem der Ansprüche 1 bis 10, **gekennzeichnet durch** zwei Kanäle (3), wobei die Auflageflächen (5) und/oder die Stauklappen (9) beider Kanäle (3) über ein gemeinsames Antriebselement (23) antreibbar sind.

12. Warenübergabevorrichtung nach Anspruch 11, **dadurch gekennzeichnet, dass** die Auflageflächen (5) beider Kanäle (3) gleichzeitig antreibbar sind und/oder dass die Stauklappen (9) beider Kanäle (3) gleichzeitig öffenbar sind.

13. Warenlager mit einer Warenübergabevorrichtung (1) nach einem der Ansprüche 1 bis 12.

14. Warenlager nach Anspruch 13, **gekennzeichnet durch** einen Manipulator, der die Waren (50) von der Warenübergabevorrichtung (1) übernimmt.

15. Warenlager nach Anspruch 13 oder 14, **gekennzeichnet durch** mehrere als Kanallager ausgebildete Lagerflächen zur Lagerung der Waren (50).

## Claims

1. A goods transfer device (1) for an automatic storage system,
- comprising at least one channel (3) with a feed side (3a) for introducing goods (50) and a dispensing side (3b) for transferring the goods to the storage system,
said channel (3) having a support surface (5) for receiving the goods (50),
wherein the channel (3) has a guide surface (7) arranged laterally on the support surface (5),
wherein the support surface (5) is inclined in the direction of the dispensing side (3b) relative to a horizontal surface (100), and
wherein the support surface (5) is inclined in the direction of the guide surface (7) at an angle of inclination (α) relative to the horizontal surface (100),
**characterized in that**
the support surface (5) is pivotable from a goods receiving position into a goods dispensing position, the angle of inclination (α) of the support surface in the goods receiving position being larger than in the goods dispensing position.

2. The goods transfer device according to claim 1, **characterized in that** the guide surface (7) is inclined relative to the support surface (5) at an angle adapted to the goods (50), the guide surface (7) preferably being pivotable together with the support surface (5).

3. The goods transfer device according to claim 1 or 2, **characterized in that**, on the dispensing side (3b) of the channel (3), an openable storage shutter (9) is arranged.

4. The goods transfer device according to any one of claims 1 to 3, **characterized in that** the support surface (5) is adapted to be driven by a linearly driven drive element (23).

5. The goods transfer device according to claim 4, **characterized in that** the drive element (23) comprises a ramp (21) for rolling movement of a guide wheel (17) thereon that is connected to the support surface (5), the guide wheel (17) preferably comprising a rounded rolling surface.

6. The goods transfer device according to any one of claims 4 or 5, **characterized in that** the drive element (23) is operative to drive the storage shutter (9) for opening the dispensing side (3b) of the channel (3).

7. The goods transfer device according to claim 6, **characterized in that** the storage shutter (9) is pivotable via an actuating element (29) driven by the drive element (23), said actuating element being guided in a sliding guide (31).

8. The goods transfer device according to claim 7, **characterized in that** the sliding guide (31) is self-locking in the closed state of the storage shutter (9).

9. The goods transfer device according to any one of claims 3 to 8, **characterized in that** the storage shutter (9) has a sensor (15) arranged on it for detecting the closed state of the storage shutter (9).

10. The goods transfer device according to any one of claims 1 to 9, **characterized in that** the angle of inclination (α) of the support surface (5) in the goods receiving position is in the range from 35° to 45° and/or that the angle of inclination (α) in the goods dispensing position is in the range from 4° to 10°.

11. The goods transfer device according to any one of claims 1 to 10, **characterized by** two channels (3), with the support surfaces (5) and/or the storage shutters (9) of both channels (3) being adapted to be driven by a common drive element (23).

12. The goods transfer device according to claim 11, **characterized in that** the support surfaces (5) of both channels (3) are adapted to be driven at the same time and/or that the storage shutters (9) of both channels (3) are adapted to be opened at the same time.

13. A storage system comprising a goods transfer device (1) according to any one of claims 1 to 12.

14. The storage system according to claim 13, **characterized by** a manipulator for taking over the goods (50) from the goods transfer device (1).

15. The storage system according to claim 13 or 14, **characterized by** a plurality of support surfaces, configured as channel-type storage bins, for storing the goods (50).

## Revendications

1. Dispositif de transfert de marchandises (1) pour un entrepôt de marchandises automatique, avec
- au moins un canal (3) comprenant une face d'admission (3a), destinée à l'introduction de marchandises (50) et une face de sortie (3b), destinée au transfert des marchandises vers l'entrepôt de marchandises ;
selon lequel le canal (3) présente une surface de support (5) destinée à la réception des marchandises (50) ;
selon lequel le canal (3) présente une surface de guidage (7) qui est disposée latéralement au niveau de la surface de support (5) ;
selon lequel la surface de support (5) est inclinée en direction de la face de sortie (3b), par rapport à une surface horizontale (100) ; et
selon lequel la surface de support (5) est inclinée en direction de la surface de guidage (7), dans un angle d'inclinaison (α), par rapport à la surface horizontale (100),
**caractérisé en ce que**
la surface de support (5) est capable de pivoter depuis une position d'entrée des marchandises dans une position de sortie des marchandises ;
selon lequel l'angle d'inclinaison α de la surface de support est plus grand dans la position d'entrée des marchandises que dans la position de sortie des marchandises.

2. Dispositif de transfert de marchandises selon la revendication 1, **caractérisé en ce que** la surface de guidage (7) est disposée dans un angle adapté aux marchandises (50), par rapport à la surface de support (5), selon lequel la surface de guidage (7) est, de préférence, capable de pivoter conjointement avec la surface de support (5).

3. Dispositif de transfert de marchandises selon la revendication 1 ou 2, **caractérisé en ce qu'**un volet de retenue (9) pouvant être ouvert est disposé au niveau de la face de sortie (3b) du canal (3).

4. Dispositif de transfert de marchandises selon l'une des revendications 1 à 3, **caractérisé en ce que** la surface de support (5) peut être entraînée par l'intermédiaire d'un élément d'entraînement (23) à commande linéaire.

5. Dispositif de transfert de marchandises selon la revendication 4, **caractérisé en ce que** l'élément d'entraînement (23) présente une rampe (21), sur laquelle tourne une roue de guidage (17) reliée à la surface de support (5), selon lequel la roue de guidage (17) présente de préférence une surface de roulement arrondie.

6. Dispositif de transfert de marchandises selon l'une des revendications 4 ou 5, **caractérisé en ce que** l'élément d'entraînement (23) entraîne le volet de retenue (9) en vue de l'ouverture de la face de sortie (3b) du canal (3).

7. Dispositif de transfert de marchandises selon la revendication 6, **caractérisé en ce que** le volet de retenue (9) est capable de pivoter par l'intermédiaire d'un élément d'actionnement (29) entraîné par l'élément d'entraînement (23), selon lequel l'élément d'actionnement est guidé dans un guidage à coulisse (31).

8. Dispositif de transfert de marchandises selon la revendication 7, **caractérisé en ce que** le guidage à coulisse (31) est autobloquant dans la position de fermeture du volet de retenue (9).

9. Dispositif de transfert de marchandises selon l'une des revendications 3 à 8, **caractérisé en ce qu'**un capteur (15) destiné à la reconnaissance de la position de fermeture du volet de retenue (9) est disposé au niveau du volet de retenue (9).

10. Dispositif de transfert de marchandises selon l'une des revendications 1 à 9, **caractérisé en ce que** l'angle d'inclinaison (α) de la surface de support (5) est compris entre 35° et 45° dans la position d'entrée des marchandises et/ou **caractérisé en ce que** l'angle d'inclinaison (α) est compris entre 4° et 10° dans la position de sortie des marchandises.

11. Dispositif de transfert de marchandises selon l'une des revendications 1 à 10, **caractérisé par** deux canaux (3), selon lequel les surfaces de support (5) et/ou les volets de retenue (9) des deux canaux (3) peuvent être entraînés par l'intermédiaire d'un élément d'entraînement (23) commun.

12. Dispositif de transfert de marchandises selon la revendication 11, **caractérisé en ce que** les surfaces de support (5) des deux canaux (3) peuvent être entraînées simultanément et/ou **caractérisé en ce que** les volets de retenue (9) des deux canaux (3) peuvent être ouverts simultanément.

13. Entrepôt de marchandises avec un dispositif de transfert de marchandises (1) selon l'une des revendications 1 à 12.

14. Entrepôt de marchandises selon la revendication 13, **caractérisé par** un manipulateur, lequel prend en charge les marchandises (50) depuis le dispositif de transfert de marchandises (1).

15. Entrepôt de marchandises selon la revendication 13 ou 14, **caractérisé par** plusieurs surfaces de stockage, lesquelles sont conçues sous la forme d'entrepôts de canaux, en vue du stockage des marchandises (50).
